# EUROPEAN PATENT SPECIFICATION

(11) **EP 3 279 280 B1**
(45) Date of publication and mention of the grant of the patent: **22.04.2020**
(21) Application number: 17183677.8
(22) Date of filing: 28.07.2017
(51) Int. Cl.: C09D 11/322, C09D 11/328, C09D 11/40

(54) **INK-SET, INK COMPOSITION, AND IMAGE FORMING METHOD**
TINTENSATZ, TINTENZUSAMMENSETZUNG UND BILDERZEUGUNGSVERFAHREN
COMPOSITION D'ENCRE, ENSEMBLE D'ENCRE ET PROCÉDÉ DE FORMATION D'IMAGES

(30) Priority: 02.08.2016 US 201615225951
(43) Date of publication of application: 07.02.2018
(73) Proprietor: Funai Electric Co., Ltd., Daito, Osaka, 574-0013 (JP)
(72) Inventor: EDAKA, Keiichi, Lexington, KY Kentucky 40511 (US); CHAMBERS, Mark A., Lexington, KY Kentucky 40511 (US); SUTHAR, Ajay K., Lexington, KY Kentucky 40511 (US)
(74) Representative: Becker & Kurig Partnerschaft Patentanwälte PartmbB

(56) References cited:
- WO-A1-2009/134247
- JP-A- 2008 231 296
- US-A1- 2003 024 434
- US-A1- 2006 092 251

## Description

### TECHNICAL FIELD

The disclosure is directed to improved ink compositions that maximize color saturation on a surface of a substrate and provide increased penetration of color through the substrate and to methods for making improved ink compositions having the foregoing characteristics.

### BACKGROUND AND SUMMARY

Ink jet recording is an advantageous print method used in many commercial products. Beneficial characteristics include small size, high speed, low cost, and adaptability to various substrates. Advances in the use of ink jet printing include the printing of three dimensional (3D) paper products that may include jewelry, relief maps, plastic and reconstructive surgery, medical training models, and the like. Such products require that the 3D printed image be of high color saturation on the surface of the paper substrate as well as through the thickness of the substrate. Dye-based inks using soluble colorants are suitable for penetrating paper substrates through the thickness thereof, but such penetration causes the top surface of the substrate to be blurred or less than sharply defined and thus the substrate does not appear to be saturated with the color. Pigment based inks containing insoluble colorants produce a sharply saturated image on the surface of a paper substrate, but such inks do not penetrate the surface to saturate the substrate through the thickness of the substrate. Accordingly, 3D printed paper substrates require a colorful saturated image on the surface of the substrate as well as through the thickness of the substrate. Attempts to increase saturation through the thickness of the substrate using more potent surfactants, more colorants in the ink formulations, and the addition of solvents to dye based inks have not achieved the desired results and in some cases, have resulted in increased printing problems. Accordingly, there remains a need for an ink-set that is suitable for 3D image printing of paper substrates to provide color saturation on the surface of the substrate as well as through the thickness of the substrate.

US 2003/024434 A1 discloses an ink composition. The ink composition includes an ink vehicle, from about 0.1 to about 10% by weight self-dispersed ink pigment, from about 0.1 to about 10% by weight dye, a humectant, and a penetrant, wherein the weight ratio of ink pigment to dye ranges from greater than about 0.75:1 to less than about 2.5:1.

US 2006/092251 A1 discloses an inkjet composition. The inkjet composition includes an anionic dye, at least one pigment, and an acidic fluid fixer, wherein the acidic fluid fixer includes at least one cationic component. Also provided are methods of printing images using an inkjet printer. Also provided are inkjet printers that include the inkjet composition.

WO 2009/134247 A1 discloses ink sets including a plurality of aqueous inks. A first ink includes a magenta dye and a magenta pigment. A second ink includes a cyan pigment, and a third ink includes a yellow pigment, wherein the second and third inks are substantially devoid of dye. The inks independently include 2-pyrrolidone or 2-hydroxyethyl-2-pyrrolidone and an additional solvent selected from a glycol, a second pyrrolidone, and mixtures thereof. Another aqueous ink-jet ink comprises a pigment and a liquid vehicle including water, 2-pyrrolidone, 2-hydroxyethyl-2-pyrrolidone, tetraethylene glycol, and 1,6-hexanediol.

JP 2008 231296 A discloses an ink set for inkjet recording comprising a yellow ink composition, a magenta ink composition and a cyan ink composition, wherein the yellow ink composition comprises C.I. Pigment Yellow 74 as the colorant, the magenta ink composition comprises a magenta pigment and a dye represented by general formula (M-1) as the colorant, and the cyan ink composition comprises a cyan pigment and a dye represented by general formula (C-1) as the colorant.

In view of the foregoing problems, embodiments of the disclosure provide an ink-set. The ink-set includes a cyan ink composition comprising from about 1.0 : 1.0 to about 1.0 : 5.0 by weight cyan pigment to cyan dye; a magenta ink composition comprising from about 1.0 : 1.5 to about 1.0 : 7.0 by weight magenta pigment to magenta dye; a yellow ink composition comprising yellow dye; and a black ink composition comprising from about 1.0 : 1.0 to about 1.0 : 1.5 by weight black pigment to black dye. The cyan ink composition comprises from about 0.5 to about 1.5 percent by weight cyan pigment and from about 1.5 to about 2.5 percent by weight cyan dye. The magenta ink composition comprises from about 0.5 to about 1.5 percent by weight magenta pigment and from about 2.5 to about 3.5 percent by weight magenta dye.

Yet another embodiment of the disclosure provides a method for three dimensional (3D) printing using a medium. The method includes providing an ink-set containing a cyan ink composition comprising from about 1.0 : 1.0 to about 1.0 : 5.0 by weight cyan pigment to cyan dye in the cyan ink composition; a magenta ink composition comprising from about 1.0 : 1.5 to about 1.0 : 7.0 by weight magenta pigment to magenta dye; a yellow ink composition comprising yellow dye; and a black ink composition comprising from about 1.0 : 1.0 to about 1.0 : 1.5 by weight black pigment to black dye; and printing with the ink-set onto the medium. The cyan ink composition comprises from about 0.5 to about 1.5 percent by weight cyan pigment and from about 1.5 to about 2.5 percent by weight cyan dye. The magenta ink composition comprises from about 0.5 to about 1.5 percent by weight magenta pigment and from about 2.5 to about 3.5 percent by weight magenta dye.

In one embodiment, the disclosure provides a three dimensional (3D) ink jet printer that contains the ink-set as disclosed herein.

In another embodiment, the disclosure provides a paper substrate printed with the ink-set disclosed herein.

In some embodiments, the yellow ink composition includes from about 2.5 to about 5.0 percent by weight yellow dye.

In some embodiments, the black ink composition includes from about 1.5 to about 1.8 percent by weight black pigment and from about 1.5 to about 1.8 percent by weight black dye.

An advantage of the disclosed embodiments is that the ink-set exhibits substantially improved color saturation and color sharpness for ink jet printed paper substrates as compared to paper substrates printed with dye-based or only pigment-based ink-sets. Thus the ink-set enables the printing of paper substrates that can be used for a variety of applications in the graphic arts, ornamental devices, jewelry, and in the medical fields, for example.

### BRIEF DESCRIPTION OF THE DRAWINGS

Further features and advantages of the disclosed embodiments may be evident from the detailed description in combination with the drawings wherein:
FIG. 1 is a graphical representation of the color intensity and paper penetration of black ink compositions according to an embodiment of the disclosure compared to black ink pigments and black ink dyes;
FIG. 2 is a graphical representation of the color intensity and paper penetration of cyan ink compositions according to an embodiment of the disclosure compared to cyan ink pigments and cyan ink dyes;
FIG. 3 is a graphical representation of the color intensity and paper penetration of magenta ink compositions according to an embodiment of the disclosure compared to magenta ink pigments and magenta ink dyes;

### DETAILED DESCRIPTION OF EXEMPLARY EMBODIMENTS

With the advent of three dimensional (3D) printing, technologies to support 3D printing have been in demand. A typical 3D printing process builds up 3D objects from polymeric solutions or melted plastics. However, a newer technology uses conventional paper to build 3D objects. According to the 3D paper technology, sheets of paper are printed and adhesively stacked together to provide a desired object. Accordingly, it is necessary for each sheet to have suitable color saturation on the surface of each sheet as well as through the thickness of the sheet.

Embodiments of the disclosure provide an ink-set suitable for 3D printing. The ink-set includes a hybrid combination of dye and pigment based ink compositions that provide full color printing.

In one embodiment, the ink-set includes a cyan ink composition containing from about 1.0 : 1.0 to about 1.0 : 5.0 by weight cyan pigment to cyan dye; a magenta ink composition comprising from about 1.0 : 1.5 to about 1.0 : 7.0 by weight magenta pigment to magenta dye; a yellow ink composition comprising yellow dye; and a black ink composition comprising from about 1.0 : 1.0 to about 1.0 : 1.5 black pigment to black dye. Accordingly, the cyan ink composition may include from about 0.5 to about 1.5 wt. percent cyan pigment and from about 1.5 to about 2.5 wt. percent cyan dye. The magenta ink composition may include from about 0.5 to about 1.5 wt. percent magenta pigment and from about 2.5 to about 3.5 wt. percent magenta dye. The yellow ink composition includes from about 2.5 to about 5.0 wt. percent yellow dye. The black ink composition includes from about 1.5 to about 1.8 percent by weight black pigment and from about 1.5 to about 1.8 percent by weight black dye.

Suitable pigments, that may be used include organic and inorganic pigments, and essentially any of the classes of pigments heretofore used in this art, of a particle size sufficient to permit free flow of the ink through the ink jet printing device, especially at the ejecting nozzles that usually have a diameter ranging from about 10 microns to about 50 microns. Thus, a suitable pigment particle size is from about 0.02 to about 15, preferably from about 0.02 to about 5, and more preferably from about 0.02 to about 1, micron (s). Pigments suitable for use in the present disclosure include azo pigments, such as azo lakes, insoluble azo pigments, condensed azo pigments and chelate azo pigments, polycyclic pigments, perylene pigments, anthraquinone pigments, quinacridone pigments, dioxazine pigments, thioindigo pigments, isoindolinone pigments, quinophthalone pigments, and dry lakes. Suitable organic pigments include nitro pigments, aniline black and daylight fluorescent pigments. Preferred pigments include carbon black, Pigment Red 122, Pigment Red 202, Pigment Blue 15: 3 and Pigment Blue 15: 4.

Because the pigments are not soluble in an aqueous carrier fluid, one or more dispersants may be used or self-dispersing pigments may be used. When used, the dispersants may be selected from those known in the art, such as the acrylic terpolymers taught in U. S. Patent No. 5,719, 204, and other commonly known dispersants.

Factors to be considered in selecting an appropriate dispersant include the following: first, the dispersant must be firmly anchored to the pigment particle surface to withstand shear force and the competition of other chemical species. Accordingly, the dispersant may be comprised of two distinct segments: a hydrophilic segment and a hydrophobic segment. The hydrophilic segment is responsible for controlling polymer solubility in the aqueous medium. Therefore, this portion of the dispersing polymer is comprised of monomers containing several hydrophilic groups to ensure adequate solubility.

Common hydrophilic functional groups include carboxylic acids, sulfonic acids, phosphate and carbonyl groups. As a result of their high carboxy content, acrylic and methacrylic acid monomers are often used to produce the hydrophilic segment of the polymeric dispersant. The hydrophobic segment is responsible for anchoring the polymeric dispersant to the pigment particle. A preferred dispersant comprises from about 0.2% to about 0.8% of an acrylic terpolymer.

To ensure this anchoring, a careful match of the polarity of the pigment particle surface and the hydrophobic group in the dispersant is required. Second, the physical dimensions of the hydrophobic group in the dispersant must be adequate to fully cover the pigment surface, otherwise, the adsorbed polymer will act as a flocculant. Third, an electrostatic layer of a requisite thickness around the particle is needed to prevent aggregation of particles within the aqueous medium. The pigment to dispersant (weight) ratio may range from about 1:1 by weight to about 9:1 by weight and is typically from about 3: 1 to about 5: 1 by weight.

The dyes that may be used in combination with the foregoing pigments are dyes commonly used in ink jet inks such as, for example, Acid, Direct, Food, and Reactive dyes, are all suitable for use as colorants in the present invention. Essentially any dye that permits the formation of colored visible images on a recording medium are used.

An illustrative list of such dyes includes, but is not limited to, nitro dyes, nitroso dyes, azo dyes such as mono-azo, di-azo and poly-azo dyes, mordant dyes, preformed metal complexes such as formazan copper complexes, pyrazolones and stilbenes, thiazoles, diphenylmethanes, triphenylmethanes, xanthenes, acridines, azines, oxazines, thiazines, quinines and indigoids. It is particularly preferred that the dye be water soluble.

Illustrative black dyes include, but are not limited to, direct dyes such as C.I. Direct Black 2, 4, 9, 11, 14, 17, 19, 22, 27, 32, 36, 41, 48, 51, 56, 62, 71, 74, 75, 77, 78, 80, 105, 106, 107, 108, 112, 113, 117, 132, 146, 154, 168, 171, and 194. Particularly preferred Direct Black dyes for use in the ink compositions of the disclosure include Direct Black 154 and Direct Black 168. Acid dyes such as C.I. Acid Black 1, 2, 7, 16, 17, 24, 26, 28, 31, 41, 48, 52, 58, 60, 63, 94, 107, 109, 112, 118, 119, 121, 122, 131, 155, and 156 may also be used. Additionally, the black dye may be selected from basic dyes such as C.I. Basic Black 2 and 8, reactive dyes such as C.I. Reactive Black 1, 3, 5, 6, 8, 12, and 14, and food dyes such as C.I. Food Black 1 and 2. Accordingly, other preferred black dyes include ILFORD K-1334, ILFORD K-1332 available from Ilford Imaging USA, Inc. of Paramus, N.J., Fast Black, Basacid Black X38 and Bayscript Special Black SP.

Illustrative magenta dyes include, but are not limited to, Nippon Magenta JPD LM-1 Liquid (an anthrapyridone disulfonic acid), and the magenta dye described in U.S. Patent No. 5,254,160. Other magenta dyes may be selected from Acid Red 35, Acid Red 52, Acid Red 81, Acid Red 249, Acid Red 289, Direct Red 289, Direct Red 227, Direct Violet 107, PROJET Magenta 2, PROJET Magenta 3BOA, DUASYN Magenta NM-SF, ILFORD® M377, 1-(2,4-xylylazo)-2-naphthol-3,6-disulphonic acid disodium salt (ACID RED 26); trisodium 3-hydroxy-4-(4-sulfonato-1-naphthylazo)-2,7-naphthalenedisulfonate (ACID RED 27); 7-naphthalenedisulfonicacid,4-amino-5-hydroxy-6-phenylazo-disodium salt (ACID RED 33); sulforhodamine B monosodium salt (ACID RED 52); 2-(2,4,5,7-tetrabromo-6-hydroxy-3-oxo-3h-xanthen-9-yl)-benzoic acid disodium (ACID RED 87); 2',4',5',7'-tetrabromo-4,5,6,7-tetrachloro-fluoresceidisodium salt (ACID RED 92); 4,5,6,7-tetrachloro-2',4',5',7'-tetraiodo-fluoresceidisodium salt (ACID RED 94); and xanthylium,9-(2-carboxyphenyl)-3-[(2-methylphenyl)amino]-6-[(2-methyl-4-sulfophenyl)amino]-hydroxide, inner salt, monosodium salt (ACID VIOLET 9), and combinations thereof.

Illustrative yellow dyes include, but are not limited to, Nippon Yellow JPD LM-NL Liquid, Direct Yellow 132, Direct Yellow 86, Acid Yellow 42, Acid Yellow 17, Direct Yellow 44, Direct Yellow 50, Direct Yellow 86, Direct Yellow 173, PROJET fast Yellow 2, PROJET Yellow 746, ILFORD®Y1189, 2,4-dinitro-1-naphthol-7-sulfo disodium salt (ACID YELLOW 1); benzenesulfonic acid, 4-4,5-dihydro-3-methyl-5-oxo-4-(phenylazo)-1H-pyrazol-1-yl-,sodium salt (ACID YELLOW 11); 1H-Pyrazole-3-carboxylic acid, 4,5-dihydro-5-oxo-1-(4-sulfophenyl)- 4-[(4-sulfophenyl)azo]-,trisodium salt (ACID YELLOW 23); Sodium 5-chloro-2-(5-hydroxy-3-methyl-4-(4-((4-methylphenyl)sulphonyloxy)phenylazo)-pyrazol-l-yl)benzenesulphonate (ACID YELLOW 40); and 9-(o-carboxyphenyl)-6-hydroxy-3h-xanthen-3-one,disodiumsalt (ACID YELLOW 73), and mixtures thereof.

Illustrative cyan dyes include, but are not limited to, a copper phthalocyanine dye having sulfonylamine groups such as Fuji PROJET Cyan GLF, Nippon Cyan JPD LM-1 Liquid, benzenemethanaminium, N-ethyl-N-[4-[[4-[ethyl[(3-sulfophenyl)methyl]amino]phenyl](4-hydroxy-2-sulfophenyl)methylene]-2,5-cyclohexadien-1-ylidene]-3-sulfo-,inner salt, disodium salt (FOOD BLUE 2); sodium 1-amino-9,10-dioxo-4-phenylaminoanthracene-2-sulphonate (ACID BLUE 5); benzenemethanaminium, N-ethyl-N-[4-[[4-[ethyl[(3-sulfophenyl)methyl]-amino]phenyl](2-sulfophenyl)methylene]-2,5-cyclohexadien-1-ylidene]-3-sulfo-, inner salt, diammonium salt (ACID BLUE 9); and benzenemethanaminium,N-[4-[[4-[(4-ethoxyphenyl)amino]phenyl][4-[ethyl[(3-sulfophenyl)-methyl]amino]-2-methylphenyl]methylene]-3-methyl-2,5-cyclohexadien-1-ylidene]-N-ethyl-3-sulfo-, inner salt, monosodium salt (BRILLIANT BLUE), and mixtures thereof.

Each of the ink compositions in the ink-set may include a humectant selected from the group consisting of dipropylene glycol, tripropylene glycol, triethylene glycol, tetraethylene glycol, 1,(2,-hydroxyethyl)-2-pyrrolidone, trimethyolpropane, 1,2-propanediol, 1,3-propanediol, 1,5-pentanediol, 2-pyrrolidone, polyethylene glycol, diethylene glycol, triethylene glycol, tetraethylene glycol, 2,2-thiodiethanol, and mixtures thereof; and a penetrant selected from the group consisting of 1,2-hexandiol, hexyl carbitol, diethylene glycol butyl ether, diethylene glycol benzyl ether, n-propyl alcohol, secondary alcohol ethoxylates, ethoxylated acetylenic diols, polyalkyleneoxide modified heptamethyltrisiloxane, and mixtures thereof. A particularly preferred humectant is a mixture of polyethylene glycol having a number average molecular weight of about 400 (PEG 400) and 2-pyrrolidone. The amount of PEG 400 in the ink composition preferably ranges from about 3 to about 10 percent by weight, most preferably from about 7 to about 8 percent by weight based on the total weight of the ink composition. The amount of 2-pyrrolidone in the ink composition also preferably ranges from about 3 to about 10 percent by weight, most preferably from about 7 to about 8 percent by weight based on the total weight of the ink composition.

Ink compositions according to the disclosure also include an ink vehicle or carrier fluid which is a major portion of the ink composition. The amount of ink vehicle in the ink composition typically ranges from about 60 to about 80 percent by weight of the total weight of the ink composition. A particularly suitable ink vehicle is deionized water, however, the disclosed embodiments are not limited to use of water as an ink vehicle and thus may include ink compositions made with organic-based ink vehicles and mixtures of organic-based ink vehicles and water.

Selection of a suitable carrier mixture depends on the requirements of the specific application involved, such as desired surface tension and viscosity, the selected colorant combination, the desired drying time of the ink, and the type of paper onto which the ink will be printed. Representative examples of water soluble organic solvents that may be selected include: (1) alcohols, such as methyl alcohol, ethyl alcohol, n-propyl alcohol, isopropyl alcohol, n-butyl alcohol, sec-butyl alcohol, t-butyl alcohol, iso-butyl alcohol, furfuryl alcohol, and tetrahydrofurfuryl alcohol; (2) ketones or ketoalcohols, such as acetone, methyl ethyl ketone and diacetone alcohol ; (3) ethers, such as tetrahydrofuran and dioxane; (4) esters, such as ethyl acetate, ethyl lactate, ethylene carbonate and propylene carbonate; (5) polyhydric alcohols, such as ethylene glycol, diethylene glycol, triethylene glycol, propylene glycol, tetraethylene glycol, polyethylene glycol, glycerol, 2-methyl-2,4-pentanediol, 1,2, 6-hexanetriol and thiodiglycol; (6) lower alkyl mono-or di-ethers derived from alkylene glycols, such as ethylene glycol monomethyl (or monoethyl) ether, diethylene glycol monomethyl (or monoethyl) ether, propylene glycol monomethyl (or monoethyl) ether, triethylene glycol monomethyl (or monoethyl) ether and diethylene glycol dimethyl (or diethyl) ether; (7) nitrogen-containing cyclic compounds, such as pyrrolidone, N-methyl-2-pyrrolidone, and 1, 3-dimethyl-2-imidazolidinone; and (8) sulfur-containing compounds, such as dimethyl sulfoxide and tetramethylene sulfone. Other useful organic solvents include lactones and lactams. Examples of suitable substituted or unsubstituted lactams include 2-pyrrolidone, 1- methyl 2-pyrrolidone, and N- (2-hydroxyethyl)-2-pyrrolidone.

Co-solvents are typically present in an amount of from about 5% to about 30% by weight, and more preferably from about 10% to about 30% by weight, including all ranges subsumed therein. As will be appreciated, the amounts of co-solvent will be dependent in part on the other components of the ink.

A binder may also optionally be used in the ink compositions of the disclosed embodiments to bridge the pigment particles within the ink and aid in their adhesion to the print medium. The use of a binder allows for greater ink durability and increased image permanence. Suitable binders include acrylic binders, commonly methacrylates and acrylates, with particle size ranges from 200-500 nm, preferably 250-350 nm. High TG binders are generally preferred for long term jetting requirements, but low TG binders are preferable for smear permanence. Also preferred are unimodal random (not block) polymer binders.

A preferred binder may comprise from about 0% to about 5% ACRYJET 3666 by weight in the ink composition. ACRYJET 3666 is a proprietary unimodal acrylic emulsion obtained from Rohm & Haas, which contains a random copolymer comprised of butylmethacrylate and methylmethacrylate monomers.

Another ingredient of the ink compositions described herein is a penetrant. Penetrants may be selected from the group consisting of 1,2-hexandiol, hexyl carbitol, diethylene glycol butyl ether, diethylene glycol benzyl ether, n-propyl alcohol, secondary alcohol ethoxylates such as TERGITOL 15-S-7 and TERGITOL 15-S-9 available from Union Carbide of Danbury, Conn., ethoxylated acetylenic diols such as SURFYNOL 465 and SURFYNOL 485 available from Air Products and Chemicals, Inc. of Allentown, Pa., polyalkyleneoxide modified heptamethyltrisiloxane such as the SILWET L series available from Loveland Industries, Inc. of Greeley, Colo., and mixtures thereof. A particularly preferred penetrant is a mixture of diethylene glycol monohexyl ether (n-hexyl carbitol) and 1,2-hexanediol. A preferred amount of hexyl carbitol in the ink composition ranges from about 0.1 to about 1.0 percent by weight, most preferably from about 0.3 to about 0.5 percent by weight based on the total weight of the ink composition. The amount of hexanediol in the ink composition preferably ranges from about 0.5 to about 5 percent by weight, most preferably from about 1 to about 3 percent by weight based on the total weight of the ink composition.

Other conventional additives may also be included in the ink composition such as biocides, mildew proofing agents, pH adjustors, antioxidants, conductivity modifiers, surfactants, chelating agents, viscosity modifiers, and oxygen-absorbing agents. Specific examples of biocides include sodium benzoate, sodium pentacholorphenol, sodium 2-pyridinethiol-1-oxide, sodium dehydroactate and 1,2-benzisothiazolin-3 -one (PROXEL GXL).

Surfactants, such as for example, SILWET, may be added to modify the surface tension of the ink and to control the penetration of the ink into the paper. Such surfactants are included in the ink compositions, and are not a component of the dispersant. Suitable surfactants include nonionic, amphoteric and ionic surfactants, preferred surfactants include alkyl sulfate, nonyl phenyl polyethylene glycol, SILWET (OSI Sealants, Inc.), TERGITOLO (Union Carbide) and SURFYNOL (Air Products and Chemicals, Inc.).

Chelating agents, such as for example, ethylene diamine tetraacetate (EDTA), may be added to prevent any deleterious effects from metal or alkali metal ion contaminants or impurities. Typically, a chelating agent may be added to the composition in an amount of from about 0.1% to about 1.0% by weight.

Biocides, such as for example, 1,2-benz-isothiazolin-3-one, may be added to the ink to prevent or inhibit growth of microorganisms in the ink. A preferred biocide is PROXEL GXL, available from Avecia, Inc., Wilmington, DE. Generally, the addition of from about 0.1 % to about 1.9% by weight of a biocide will be efficacious, preferably from about 0. 1% to about 0.2%.

Buffering agents, preferably potassium hydroxide, may also be added to adjust or maintain a desired pH for the ink. As will be appreciated, the amount of buffer will depend on the other components in the ink. However, it has been found that the addition of small amounts of buffer to the ink, such as from about 0.01% to about 0.3% by weight, is useful.

The order of addition of the components to provide the ink composition is not particularly critical to the invention. However, a preferred order for making the formulation is to add the dye and pigment as a pigment concentrate to water, then add the other components, i.e., the humectants, the penetrants and the biocide to the dye and pigment mixture. The components are thoroughly mixed to provide the ink composition.

The inks of the present invention may be prepared by essentially any process for preparing ink jet inks. A preferred procedure for preparing an illustrative ink is as follows: Humectants, penetrant (s) and binder are added to the DI water and mixed for 20 minutes. Pigment concentrates (for dispersion) and/or dyes are then slowly added and mixed for an additional 20 minutes. The pH of the ink is adjusted to from about 8.2 to about 8.5 with the pH buffer while mixing. The ink is then filtered through a series of filters, with the final filter being 1.2 microns. The median particle size determined by Microtrac UPA 150 measurements is from about 20 nm to about 150 nm.

Representative dye and pigment ink formulations are given in the following table.

**TABLE 1**

| | Black Ink | Wt. % | Cyan Ink | Wt. % | Magenta Ink | Wt. % | Yellow Ink | Wt.% |
|---|---|---|---|---|---|---|---|---|
| Colorant | Black Dye | 1.7 | Cyan Dye | 2.2 | Magenta dye | 3.0 | Yellow Dye | 3.5 |
| | Black Pigment | 1.7 | Cyan Pigment | 1.2 | Magenta Pigment | 1.0 | Yellow Pigment | 0.0 |
| Humectants | Glycerol | 5.0 | 1,2-propanediol | 7.0 | 1,5-pentanediol | 5.0 | 1,5-pentanediol | 5.0 |
| | 1,3-propanediol | 8.0 | 1,3-propanediol | 7.0 | 1,3-propanediol | 10.0 | 1,3-propanediol | 10.0 |
| | Triethylene glycol | 7.0 | Triethylene glycol | 6.0 | Dipropylene glycol | 5.0 | Triethylene glycol | 5.0 |
| Penetrant | 1,2-hexanediol | 0.0 | 1,2-hexanediol | 2.5 | 1,2-hexanediol | 2.5 | 1,2-hexanediol | 2.5 |
| Surfactant | SILWET | 0.5 | SILWET | 0.87 | SILWET | 0.8 | SILWET | 0.8 |
| Water | Water | 76.0 | Water | 74.0 | Water | 73.0 | Water | 73.0 |

In the following examples, the brightness L* of mixed pigment and dye ink compositions through a paper substrate is compared to the brightness L* of the pigment ink composition and dye ink composition alone.

### EXAMPLE 1

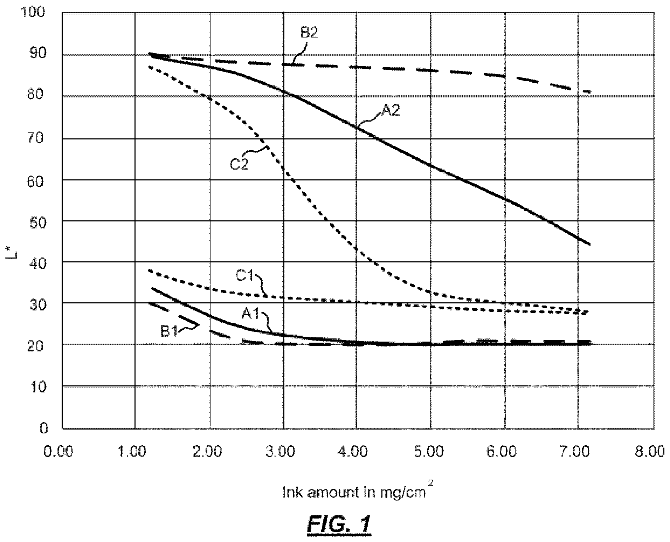

A black ink composition containing about 50 wt.% black dye and about 50 wt.% black pigment was printed on an ink jet paper to determine the L* value through the paper. The results are shown in FIG. 1, wherein A1 is the L* value on the printed side of the paper for ink printed with a mixture of dye and pigment ink, B1 is the L* value on the printed side of the paper for a pigment ink, and C1 is the L* on the printed side of the paper for a dye ink. The reverse side of the paper had a higher L* value for printed ink amounts ranging from 1 to 3 mg/cm² of ink on the paper as shown by A2 for a mixture of dye and pigment ink, B2 for a pigment ink, and C2 for a dye ink. However, the dye ink C2 had about the same L* value on both sides of the paper in the range of 5 to 7 mg/cm² of ink on the paper. As shown by lines A1, Bl, and C1, the L* value decreased on the printed side of the paper as the amount of printed ink increased with the pigment ink (B1) having the darkest color (lowest L* value) on the printed side of the paper. There was a significantly greater decrease in L* value on the reverse side of the paper for increasing amounts of printed ink for the mixture of dye and pigment (A2) and for the dye ink (C2) than there was for the pigment ink (B2), as expected, which generally remains on the printed side of the paper. The dye ink (C2) had the lowest L* values for all ranges of printed ink amounts since the dye most readily penetrates through the paper. As shown by line Al, the ink mixture of dye and pigment gave a similar L* value on the printed side of the paper for all ranges of printed ink amounts similar to the pigment ink B1 and gave a significant decrease in L* value (A2) similar to the dye ink (C2) on the reverse side of the paper for all ranges of printed ink amounts.

### Example 2

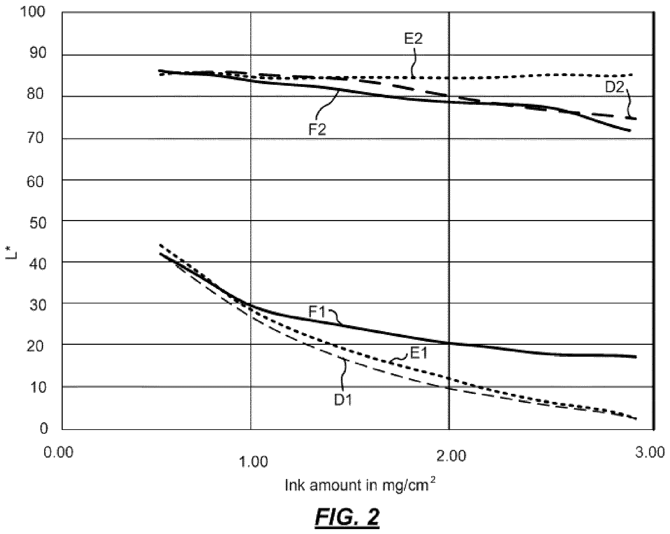

A cyan ink composition containing 1.2 wt.% cyan pigment and 2.2 wt.% blue dye was printed on an ink jet paper to determine the L* value through the paper. The results are shown in FIG. 2, wherein D1 is the L* value on the printed side of the paper for ink printed with a mixture of dye and pigment ink, E1 is the L* value on the printed side of the paper for a pigment ink, and F1 is the L* on the printed side of the paper for a dye ink. As shown by lines D1, El, and F1, the L* value decreased on the printed side of the paper as the amount of printed ink increased with the mixture of inks (D1) and the pigment ink (E1) generally having the darkest color (lowest L* value) on the printed side of the paper. There was a less of a decrease in L* value on the reverse side of the paper for increasing amounts of printed ink for the mixture of dye and pigment (D2) and for the dye ink (F2) than there was for the pigment ink (E2), as expected, which generally remains on the printed side of the paper. The dye ink (F2) had the lowest L* values for all ranges of printed ink amounts since the dye most readily penetrates through the paper. As shown by line D1, the ink mixture of dye and pigment gave a similar L* value on the printed side of the paper for all ranges of printed ink amounts similar to the pigment ink E1 and gave a decrease in L* value (D2) similar to the dye ink (F2) on the reverse of the paper for all ranges of printed ink amounts.

### Example 3

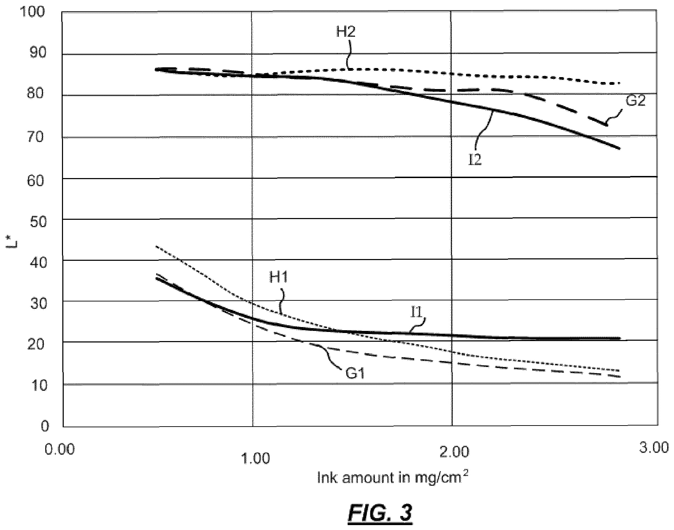

A magenta ink composition containing 1.0 wt.% magenta pigment and 3.0 wt.% magenta dye was printed on an ink jet paper to determine the L* value through the paper. The results are shown in FIG. 3, wherein G1 is the L* value on the printed side of the paper for ink printed with a mixture of dye and pigment ink, H1 is the L* value on the printed side of the paper for a pigment ink, and I1 is the L* on the printed side of the paper for a dye ink. As shown by lines G1, H1, and I1, the L* value decreased on the printed side of the paper as the printed amount of ink increased with the mixture of dye and pigment ink (G1) generally having the darkest color (lowest L* value) on the printed side of the paper. There was a less of a decrease in L* value on the reverse side of the paper for increasing amounts of printed ink for the mixture of dye and pigment (G2) and for the dye ink (12) than there was for the pigment ink (H2), as expected, which generally remains on the printed side of the paper. The dye ink (I2) had the lowest L* values for all ranges of printed ink amounts since the dye most readily penetrates through the paper. As shown by line G1, the ink mixture of dye and pigment gave a similar L* value on the printed side of the paper for all ranges of printed ink amounts similar to the pigment ink H1 and gave a decrease in L* value (G2) similar to the dye ink (I2) on the reverse side of the paper for all ranges of printed ink amounts.

It is contemplated, and will be apparent to those skilled in the art from the foregoing specification that modifications and/or changes may be made in the embodiments of the invention. Accordingly, it is expressly intended that the foregoing are only illustrative of the preferred embodiments and are not limiting thereto and that the true spirit and scope of the present invention be determined by reference to the appended claims.

## Claims

1. An ink-set comprising:
a cyan ink composition comprising from about 1.0 : 1.0 to about 1.0 : 5.0 by weight cyan pigment to cyan dye;
a magenta ink composition comprising from about 1.0 : 1.5 to about 1.0 : 7.0 by weight magenta pigment to magenta dye;
a yellow ink composition comprising yellow dye; and
a black ink composition comprising from about 1.0 : 1.0 to about 1.0 : 1.5 by weight black pigment to black dye,
wherein the cyan ink composition comprises from about 0.5 to about 1.5 percent by weight cyan pigment and from about 1.5 to about 2.5 percent by weight cyan dye, and
wherein the magenta ink composition comprises from about 0.5 to about 1.5 percent by weight magenta pigment and from about 2.5 to about 3.5 percent by weight magenta dye.

2. The ink-set of claim 1, wherein the yellow ink composition comprises from about 2.5 to about 5.0 percent by weight yellow dye.

3. The ink-set of any one of claims 1 to 2, wherein the black ink composition comprises from about 1.5 to about 1.8 percent by weight black pigment and from about 1.5 to about 1.8 percent by weight black dye.

4. A three dimensional (3D) ink jet printer comprising the ink-set of any one of claims 1 to 3.

5. A three dimensional (3D) paper substrate printed with the ink-set of any one of claims 1 to 3.

6. A method for three dimensional (3D) printing using a medium comprising:
providing an ink-set comprising:
a cyan ink composition comprising from about 1.0 : 1.0 to about 1.0 : 5.0 by weight cyan pigment to cyan dye in the cyan ink composition;
a magenta ink composition comprising from about 1.0 : 1.5 to about 1.0 : 7.0 by weight magenta pigment to magenta dye;
a yellow ink composition comprising yellow dye; and
a black ink composition comprising from about 1.0 : 1.0 to about 1.0 : 1.5 by weight black pigment to black dye; and printing with the ink-set onto the medium,
wherein the cyan ink composition comprises from about 0.5 to about 1.5 percent by weight cyan pigment and from about 1.5 to about 2.5 percent by weight cyan dye, and
wherein the magenta ink composition comprises from about 0.5 to about 1.5 percent by weight magenta pigment and from about 2.5 to about 3.5 percent by weight magenta dye.

7. The method of claim 6, wherein the ink-set is printed with a three dimensional (3D) ink jet printer.

8. The method of any one of claims 6 to 7, wherein the yellow ink composition comprises from about 2.5 to about 5.0 percent by weight yellow dye.

9. The method of any one of claims 6 to 8, wherein the black ink composition comprises from about 1.5 to about 1.8 percent by weight black pigment and from about 1.5 to about 1.8 percent by weight black dye.

10. The method of any one of claims 6 to 9, wherein the medium comprises paper substrate.

## Patentansprüche

1. Tintensatz, umfassend:
eine Cyan-Tintenzusammensetzung, umfassend etwa 1,0 : 1,0 bis etwa 1,0 : 5,0 nach Gewicht Cyan-Pigment zu Cyan-Farbstoff;
eine Magenta-Tintenzusammensetzung, umfassend etwa 1,0 : 1,5 bis etwa 1,0 : 7,0, nach Gewicht Magenta-Pigment zu Magenta-Farbstoff;
eine gelbe Tintenzusammensetzung, umfassend gelben Farbstoff; und
eine schwarze Tintenzusammensetzung, umfassend von etwa 1,0 : 1,0 bis etwa 1,0 : 1,5, nach Gewicht schwarzem Pigment zu schwarzem Farbstoff,
wobei die Cyan-Tintenzusammensetzung etwa 0,5 bis etwa 1,5 Gewichtsprozent Cyan-Pigment und von etwa 1,5 bis etwa 2,5 Gewichtsprozent Cyan-Farbstoff umfasst, und
wobei die Magenta-Tintenzusammensetzung von etwa 0,5 bis etwa 1,5 Gewichtsprozent Magenta-Pigment und etwa 2,5 bis etwa 3,5 Gewichtsprozent Magenta-Farbstoff umfasst.

2. Tintensatz gemäß Anspruch 1, wobei die gelbe Tintenzusammensetzung von etwa 2,5 bis etwa 5,0 Gewichtsprozent gelben Farbstoff umfasst.

3. Tintensatz gemäß irgendeinem der Ansprüche 1 bis 2, wobei die schwarze Tintenzusammensetzung von etwa 1,5 bis etwa 1,8 Gewichtsprozent schwarzes Pigment und von etwa 1,5 bis etwa 1,8 Gewichtsprozent schwarzen Farbstoff umfasst.

4. Dreidimensionaler (3D) Tintenstrahldrucker, umfassend den Tintensatz gemäß irgendeinem der Ansprüche 1 bis 3.

5. Dreidimensionales (3D) Papiersubstrat, das mit dem Tintensatz gemäß irgendeinem der Ansprüche 1 bis 3 bedruckt ist.

6. Verfahren zum dreidimensionalen (3D) Drucken unter Verwendung eines Mediums, umfassend:
Bereitstellen eines Tintensatzes, umfassend:
eine Cyan-Tintenzusammensetzung, die von etwa 1,0 : 1,0 bis etwa 1,0 : 5,0 nach Gewicht Cyan-Pigment zu Cyan-Farbstoff in der Cyan-Tintenzusammensetzung umfasst;
eine Magenta-Tintenzusammensetzung, die von etwa 1,0 : 1,5 bis etwa 1,0 : 7,0 nach Gewicht Magenta-Pigment zu Magenta-Farbstoff umfasst;
eine gelbe Tintenzusammensetzung, umfassend gelben Farbstoff; und
eine schwarze Tintenzusammensetzung, umfassend von etwa 1,0 : 1,0 bis etwa 1,0 : 1,5 nach Gewicht schwarzes Pigment zu schwarzen Farbstoff; und Drucken mit dem Tintensatz auf das Medium,
wobei die Cyan-Tintenzusammensetzung von etwa 0,5 bis etwa 1,5 Gewichtsprozent Cyan-Pigment und von etwa 1,5 bis etwa 2,5 Gewichtsprozent Cyan-Farbstoff umfasst, und
wobei die Magenta-Tintenzusammensetzung von etwa 0,5 bis etwa 1,5 Gewichtsprozent Magenta-Pigment und von etwa 2,5 bis etwa 3,5 Gewichtsprozent Magenta-Farbstoff umfasst.

7. Verfahren gemäß Anspruch 6, wobei der Tintensatz mit einem dreidimensionalen (3D) Tintenstrahldrucker gedruckt wird.

8. Verfahren gemäß irgendeinem der Ansprüche 6 bis 7, wobei die gelbe Tintenzusammensetzung von etwa 2,5 bis etwa 5,0 Gewichtsprozent gelben Farbstoff umfasst.

9. Verfahren gemäß irgendeinem der Ansprüche 6 bis 8, wobei die schwarze Tintenzusammensetzung von etwa 1,5 bis etwa 1,8 Gewichtsprozent schwarzes Pigment und von etwa 1,5 bis etwa 1,8 Gewichtsprozent schwarzen Farbstoff umfasst.

10. Verfahren gemäß irgendeinem der Ansprüche 6 bis 9, wobei das Medium ein Papiersubstrat umfasst.

## Revendications

1. Jeu d'encre comprenant :
une composition d'encre cyan comprenant entre environ 1,0 : 1,0 et environ 1,0 : 5,0 en poids du pigment cyan au colorant cyan ;
une composition d'encre magenta comprenant entre environ 1,0 : 1,5 et environ 1,0 : 7,0 en poids du pigment magenta au colorant magenta ;
une composition d'encre jaune comprenant un colorant jaune ; et
une composition d'encre noire comprenant entre environ 1,0 : 1,0 et environ 1,0 : 1,5 en poids du pigment noir au colorant noir,
dans lequel la composition d'encre cyan comprend entre environ 0,5 et environ 1,5 % en poids de pigment cyan et entre environ 1,5 et environ 2,5 % en poids de colorant cyan, et
dans lequel la composition d'encre magenta comprend entre environ 0,5 et environ 1,5 % en poids de pigment magenta et entre environ 2,5 et environ 3,5 % en poids de colorant magenta.

2. Jeu d'encre selon la revendication 1, dans lequel la composition d'encre jaune comprend entre environ 2,5 et environ 5,0 % en poids de colorant jaune.

3. Jeu d'encre selon la revendication 1 ou la revendication 2, dans lequel la composition d'encre noire comprend entre environ 1,5 et environ 1,8 % en poids de pigment noir et entre environ 1,5 et environ 1,8 % en poids de colorant noir.

4. Imprimante à jet d'encre tridimensionnelle (3D) comprenant le jeu d'encre selon l'une quelconque des revendications 1 à 3.

5. Substrat en papier tridimensionnel (3D) imprimé à l'aide du jeu d'encre selon l'une quelconque des revendications 1 à 3

6. Procédé d'impression tridimensionnelle (3D) en utilisant un milieu comprenant :
l'apport d'un jeu d'encre comprenant :
une composition d'encre cyan comprenant entre environ 1,0 : 1,0 et environ 1,0 : 5,0 en poids du pigment cyan au colorant cyan dans la composition d'encre cyan ;
une composition d'encre magenta comprenant entre environ 1,0 : 1,5 et environ 1,0 : 7,0 en poids du pigment magenta au colorant magenta ;
une composition d'encre jaune comprenant un colorant jaune ; et
une composition d'encre noire comprenant entre environ 1,0 : 1,0 et environ 1,0 : 1,5 en poids du pigment noir au colorant noir ; et l'impression avec le jet d'encre sur le milieu,
dans lequel la composition d'encre cyan comprend entre environ 0,5 et environ 1,5 % en poids de pigment cyan et entre environ 1,5 et environ 2,5 % en poids de colorant cyan, et
dans lequel la composition d'encre magenta comprend entre environ 0,5 et environ 1,5 % en poids de pigment magenta et entre environ 2,5 et environ 3,5 % en poids de colorant magenta.

7. Procédé selon la revendication 6, dans lequel le jeu d'encre est imprimé avec une imprimante à jet d'encre tridimensionnelle (3D).

8. Procédé selon l'une quelconque des revendications 6 à 7, dans lequel la composition d'encre jaune comprend entre environ 2,5 et environ 5,0 % en poids de colorant jaune.

9. Procédé selon l'une quelconque des revendications 6 à 8, dans lequel la composition d'encre noire comprend entre environ 1,5 et environ 1,8 % en poids de pigment noir et entre environ 1,5 et environ 1,8 % en poids de colorant noir.

10. Procédé selon l'une quelconque des revendications 6 à 9, dans lequel le milieu comprend un substrat en papier.
